Europäisches Patentamt

European Patent Office

Office européen des brevets

(11) Publication number: **0 056 164**
**B1**

(12) **EUROPEAN PATENT SPECIFICATION**

(45) Date of publication of patent specification: **31.07.85**

(21) Application number: **81110847.1**

(22) Date of filing: **30.12.81**

(51) Int. Cl.⁴: **C 01 B 25/36,** C 08 F 10/00,
C 08 F 4/22, B 01 J 27/16,
C 08 F 4/02, C 08 F 4/78,
C 08 F 4/62

(54) Production of aluminum phosphate from concentrated mass.

(30) Priority: **31.12.80 US 221753**
**31.12.80 US 221747**

(43) Date of publication of application:
**21.07.82 Bulletin 82/29**

(45) Publication of the grant of the patent:
**31.07.85 Bulletin 85/31**

(84) Designated Contracting States:
**AT BE DE FR IT NL SE**

(56) References cited:
**FR-A-1 269 892**
**FR-A-2 323 702**
**US-A-2 840 551**
**US-A-3 157 712**

(73) Proprietor: **PHILLIPS PETROLEUM COMPANY**
**5th and Keeler**
**Bartlesville Oklahoma 74004 (US)**

(72) Inventor: **McDaniel, Max Paul**
**1601 S.E. Melmart Drive**
**Bartlesville Oklahoma 74003 (US)**
Inventor: **Johnson, Marvin Merrill**
**4413 Woodland Road**
**Bartlesville Oklahoma 74003 (US)**

(74) Representative: **Dost, Wolfgang, Dr.rer.nat.,
Dipl.-Chem. et al
Patent- und Rechtsanwälte Bardehle-
Pagenberg-Dost-Altenburg & Partner Postfach
86 06 20
D-8000 München 86 (DE)**

**The file contains technical information
submitted after the application was filed and
not included in this specification**

Courier Press, Leamington Spa, England.

## Description

### Background of the invention

This invention relates to the production of aluminum phosphate. The production of aluminum phosphate by combining aqueous solutions of an aluminum salt and a source of phosphate ions, such as phosphoric acid, followed by neutralization with a base to give a precipitate or a true hydrogel is well known in the art. The resulting phosphate has been disclosed to have several utilities including use as a support for chromium oxide catalysts. There is considerable progression in the art with regard to the preparation of aluminum phosphate catalysts with the newer art suggesting forming the gel at a relatively high pH in order to obtain a higher surface area product. Generally, the art suggests converting the hydrogel to a xerogel by means of simple oven or tray drying or spray drying although it is incidentally taught in the art to wash with a water miscible liquid, such as an alcohol.

At least as it relates to a base for chromium catalysts, even the most advanced teachings of the prior art still do not produce a base which has found favor as a chromium catalyst support for olefin polymerization. Thus, chromium catalysts are generally supported on silica-containing bases similar to those used decades ago when the chromium catalyzed polymerization of olefin polymers first became commercial.

### Summary of the invention

It is an object of this invention to provide a novel method of producing aluminum phosphate;

It is a further object of this invention to provide an olefin polymerization catalyst capable of high productivity;

It is yet a further object of this invention to provide an olefin polymerization catalyst which does not fall off in activity during polymerization of a monomer;

It is a further object of this invention to produce a superior aluminum phosphate for use as a base for chromium or vanadium catalyzed olefin polymerization; and

It is still yet a further object of this invention to provide a simplified method of producing aluminum phosphate.

Accordingly, the invention relates to a process for producing gelled aluminum orthophosphate by reacting an aluminum salt with a source of orthophosphate ions and adding to the reaction mixture a neutralizing agent which process is characterized in that said reaction of said aluminum salt and said source of orthophosphate ions is carried out in a concentrated mass containing no more than 40 weight percent added water, based on the weight of said aluminum salt, to obtain said gelled aluminum phosphate.

Hereinafter, for the sake of brevity the term "concentrated mass" is used to identify a mass containing no more than 40 weight percent of added water, based on the weight of the aluminum salt.

Whereas FR—A—2 323 702 discloses a process utilizing about 100% water based on the weight of the aluminum salt, the process of the invention using no more than 40% water results in products having surprisingly improved properties which could not be expected in view of the art.

In accordance with a first embodiment of this invention, a source of orthophosphate ions is combined with an aluminum salt to form a concentrated mass, thereafter this mass is combined with a base to form a hydrogel and water is removed to convert the hydrogel to a xerogel.

In accordance with a second embodiment of this invention, a source of orthophosphate ions is combined with an aluminum salt to form a concentrated mass, thereafter this mass is combined with a neutralizing agent for partial neutralization and the resulting composition aged until gellation occurs.

### Description of the preferred embodiments

Both embodiments comprise the formation of a gel from a concentrated mass of reactants comprising aluminum ions from an aluminum salt and a source of orthophosphate ions. This is done by using an aluminum salt which will melt, preferably one which will melt at or below the boiling point of water or by forming a syrup of a water soluble aluminum salt and a very small amount of water.

In the second embodiment the aluminum phosphate gel is formed at a strongly acid pH and the concentrated mass is partially neutralized and aged.

Generally, hydrated aluminum salts such as hydrated aluminum nitrate are most susceptable to being melted and thus are preferred as the source of aluminum ions for the melt method. Aluminum bromide and hydrated aluminum bromate can also be used as can, broadly, any aluminum salt which will melt. If desired, up to 20 weight percent additional water can be present based on the weight of the aluminum salt or there can be no water except the water, if any, from the water of hydration and the water, if any, from the base used in the subsequent neutralization, i.e., no extraneous water is added. By additional water is meant water actually added as water and does not count the water, if any, from the water of hydration of the ingredients and/or the water, if any, from the base. There may be some advantage to adding 1 to 15 weight percent water based on the weight of the aluminum salt, however. The percentages of the water are based on the actual weight of the aluminum salt including any water of hydration.

Alternatively, an aluminum salt which will not necessarily melt but which will dissolve in water enough to form a syrup in up to 40 weight percent or less water based on the weight of the aluminum salt can be used. Generally, 5 to 20 weight percent water in the first embodiment and 5 to 40 weight percent water in

2

the second embodiment is used based on the weight of the aluminum salt when a syrup is formed. Aluminum sulfate, for instance is ideally suited for use in this embodiment of the invention. Aluminum nitrate is also suitable as is any water soluble aluminum salt.

In the second embodiment there is an interrelation between the amount of water used, if any, and the degree of neutralization. Less water or more neutralization agent gives faster gellation, while more water and less neutralization agent give slower gellation. Hence, if the upper end of the broad range on water content is approached, the extent of neutralization must be strictly within the 60 to 70 percent range set out hereinafter, (at least so far as the lower end of the range is concerned), preferably 65 to 70 percent. If no water, or an amount within the preferred range of 5 to 40 percent is used, then the entire 60 to 70 percent neutralization range is quite satisfactory with possibly even a little leeway on each end thereof. Generally, no gel will form at 56 percent neutralization (56 percent of the stoichiometric amount of neutralizing agent added) and generally gellation will occur spontaneously at about 72 percent so these extremes must be avoided. With these guidelines, it is easy to use the right combination of water, if any, and percentage neutralization to give gellation on aging for 1 minute to 48 hours, preferably 5 minutes to 10 hours, more preferably 10 minutes to 3 hours.

In the second embodiment by complete (theoretical) neutralization is meant that the final pH is 7. The range 60 to 70 percent neutralization is based on the use of aluminum nitrate, monobasic ammonium phosphate and a P/Al ratio of 0.8. This would vary depending on the aluminum salt used, the phosphorus to aluminum ratio and would, of course vary in a manner easily calculated if dibasic ammonium phosphate or phosphoric acid were used. That is, if dibasic ammonium phosphate is used, then one less mole of base per mole of phosphate is needed and if phosphoric acid is used one more mole of base per mole of phosphate is needed. In any event enough is used to give a pH below 4 and to cause gellation after a reasonable period of aging.

The source of the phosphate ions can be any source of orthophosphate ions and is generally orthophosphoric acid or orthophosphates, such as monobasic ammonium phosphate or dibasic ammonium phosphate or mixtures thereof. Of the ammonium phosphates, the monobasic is preferred.

The temperature, if a melt is used, can be any temperature at or above which the aluminum salt chosen will melt. The reaction can be carried out in any atmosphere including air or can be carried out under an inert atmosphere for instance. Generally, temperatures of 65—200°C, preferably 65—100°C are used. Although, since the preferred aluminum salt is $Al(NO_3)_3 . 9H_2O$ which melts at 73°C, the most preferred temperatures based on the use of this aluminum salt is about 80°C±5°C. If a very concentrated syrup of a water soluble aluminum salt and water is used, any temperature up to the boiling point of the syrup under the conditions employed can be used, preferably from 20 to 150°C or from 20 to 100°C.

Since very little water, if any, is present during the formation of the aluminum phosphate, it is not necessary to utilize azeotropic distillation or washing with a normally liquid water miscible organic solvent to remove the water gently although azeotropic distillation or washing with a normally liquid water miscible organic solvent can be the preferred method of removing water. Also, the concentrated mass gives a gel with greater physical strength. Finally, olefin polymerization chromium catalysts supported on such a base have higher activity and less tendency for activity to drop off during polymerization of the monomer.

It has been found that low pore volume hydrogels usually give the highest porosity xerogels after drying because they have superior internal strength to withstand the compression of surface tension during the drying. Thus, if the hydrogel occupies 10 cm³ per gram of aluminum phosphosphate or less, generally 3 to 6 cm³ per gram, it will give a xerogel having improved porosity for a catalyst base than will a hydrogel conventionally prepared from a dilute aqueous solution which will occupy about 11 cm³ per gram or more. By 6 cm³ per gram, for instance is meant that each gram of any aluminum phosphate occupied 6 cm³ in the hydrogel stage. Thus, another way to define the concentrated mass is that the aluminum salt melt/phosphate mass or aluminum syrup/phosphate mass is sufficiently concentrated so as to give a hydrogel which occupies 3 to 6 cm³ per gram. The theoretical minimum if no extraneous water is added is about 3 cm³ per gram with aluminum nitrate.

The following representative calculations of the volume per gram of concentrated mass of invention preparations, the further calculation showing the same methematics for a run of the prior art and the two further calculations showing the same mathematics for a dilute system are presented to facilitate an understanding of the meaning of the concept of the final dry aluminum phosphate having occupied a relatively small number of cm³ per gram in the prior hydrogel stage. These calculations are based on the use of one quarter mole of $Al(NO_3)_3 . 9H_2O$ and about one-fifth mole monobasic ammonium phosphate plus sufficient $Cr(NO_3)_3 . 9H_2O$ to give one weight percent chromium in the final catalyst. The slight disparity between the mole ratio of aluminum nitrate to aluminum phosphate reflects the desire to have a phosphorus to aluminum ratio of 0.8 in the final phosphate. It has been found experimentally that this amount of material when the aluminum nitrate is melted and the other ingredients added thereto occupies about 90 cm³. If it is gelled, by partial neutralization in the second embodiment, with ammonia gas, the ammonia gas will add no appreciable amount to the volume and the volume of the gel is approximately equal to the volume of the melt. This, then, gives one quarter mole of low phosphorus aluminum phosphate which weighs 27 grams when washed of salts and dried. As previously set out, this amount of material in the hydrogel stage occupied 90 cm³. Ninety cm³ divided by 27 cm³ is 3.3 cm³ per gram

3

representing approximately the theoretical minimum space which one gram of dry aluminum phosphate can occupy when in the hydrogel stage. This might vary slightly if other proportions or types of starting ingredients were used.

In the first embodiment more typically, however, neutralization will be carried out in accordance with the invention by neutralizing with 46 cc of ammonium hydroxide per one quarter mole. This then will add 46 cc to the 90 cc volume obtained with no water added in the neutralization to give a total of 136 cc which will still produce the same 27 grams of ammonium phosphate when washed of salts and dried. One hundred thirty-six divided by 27 equals 5.0 which is the volume in cc occupied in the hydrogel state by one gram of final dry ammonium phosphate in this preparation.

In the first embodiment in many runs, a very small amount of water, for instance 10 cc were added to the melt giving a total volume of 100 cc instead of 90. Then on adding 46 cc of ammonium hydroxide, the total volume would be 146 which would still produce 27 grams of dry ammonium phosphate. One hundred forty-six divided by 27 equals 5.4 cc of hydrogel which give one gram of final dry aluminum phosphate.

In the first embodiment even if 40 percent water based on the aluminum salt is used, this is still a very small amount of water overall. For instance, 40 percent of 93 grams, the weight of one quarter mole $Al(NO_3) . 9H_2O$ is only 37 cc which added to 136 cc gives a total volume of hydrogel of 173 cc, which divided by 27 grams is 6.4 cc per gram.

Compared to the first embodiment, in the prior art, typically 0.2 to 2 liters of water are utilized with one quarter mole of ingredients. Taking the lower end of this typical preparation of 0.2 liter, this added to the 136 cc obtained when no water is added would give 336 cc total volume divided by the 30 grams of product would give about 11 cc per gram. A more typical prior art preparation utilizing about one liter of water with one quarter mole of ingredients would give 1136 cc which divided by 27 would be 42 cc per gram.

In the first embodiment if it is desired to wash the hydrogel with water, then azeotropic distillation or washing with a volatile, oxygen-containing water miscible organic solvent having a relatively low surface tension is desirable (adding water after the gel is formed does not harm the pore structure if it is removed gently as just described). After drying of water in this manner, the gel is preferably dried of solvent under mild conditions, for instance by heating at a temperature of 25 to 150°C, most preferably under vacuum.

In the second embodiment, more typically, however, neutralization of the concentrated mass will be carried out by partially neutralizing it with concentrated ammonium hydroxide. Complete neutralization (obtaining 30 g of hydrogel of pH 7) would require 46 $cm^3$ of ammonium hydroxide per one quarter mole. Partial neutralization with, for instance, two-thirds of this would require 31 $cm^3$. This then will add 31 $cm^3$ to the 90 $cm^3$ volume obtained with no water added in the neutralization to give a total of 121 $cm^3$ which will still produce the same 27 grams of ammonium phosphate when washed of salts and dried. One hundred twenty-one $cm^3$ divided by 27 $cm^3$ equals 4.5 which is the volume in $cm^3$ occupied in the hydrogel state by one gram of final dry ammonium phosphate in this preparation. By concentrated ammonium hydroxide is meant an aqueous solution containing about 30 weight percent ammonia.

In the second embodiment if a very small amount of water, for instance 10 $cm^3$ were added to the melt, this would give a total volume of 100 $cm^3$ instead of 90 $cm^3$. Then on adding 31 $cm^3$ of ammonium hydroxide, the total volume would be 131 $cm^3$ which would still produce 27 grams of dry ammonium phosphate. One hundred thirty-one $cm^3$ divided by 27 $cm^3$ equals 4.9 cc of hydrogel which give one gram of final dry aluminum phosphate.

In the second embodiment even if 40 percent water based on the aluminum salt is used, this is still a very small amount of water overall. For instance, 40 percent of 93 grams, the weight of one quarter mole $Al(NO_3) . 9H_2O$ is only 37 $cm^3$ which added to 121 $cm^3$ gives a total volume of hydrogel of 158 $cm^3$, which divided by 27 grams is 5.9 $cm^3$ per gram.

Compared with the second embodiment, in the conventional dilute systems, typically 0.2 to 2 liters of water are utilized with one quarter mole of ingredients. Taking the lower end of this typical preparation of 0.2 liter, this added to the 136 $cm^3$ obtained when no water is added (the prior art would use complete neutralization which would require 36 $cm^3$ not 31 $cm^3$) would give 336 $cm^3$ total volume divided by the 27 grams of product would give about 12 $cm^3$ per gram. A more typical conventional preparation utilizing about one liter of water with one quarter mole of ingredients would give 1136 $cm^3$ which divided by 27 $cm^3$ would be 42 $cm^3$ per gram. Thus, even the largest amount of water contemplated in this invention, 40 percent based on the aluminum salt is a relatively small amount.

While low phosphorus aluminum phosphate may be thought of for convenience as a mixture of alumina and aluminum phosphate, it is not, but rather is a gel with some of the trivalent $PO_4$ groups replaced with trivalent $AlO_3$ groups.

It may be desirable in some instances to coprecipitate other materials such as titania with the phosphate or have other materials present during the gellation and/or activation such as fluoride. For instance, if the purpose is to produce a support for a chromium catalyst, the chromium compound such as chromium nitrate or $CrO_3$ or chromium acetate can be introduced with the reactants. Similarly, a silicon compound, such as silicon tetrachloride can be coprecipitated with the phosphate.

When the object is to produce a catalyst base, it is frequently preferred that a small amount of a boron compound, such as boric acid, be introduced into the concentrated mass to be coprecipitated with the aluminum phosphate. Other suitable boron compounds include borates, such as ammonium borate. By coprecipitated as it relates to the boron compound, it is meant that the aluminum phosphate is formed into a true hydrogel in the presence of the boron compound. It is not known to what extent the borate becomes incorporated in the hydrogel structure. The amount of boron compound present when the aluminum phosphate is gelled can vary widely but it is generally used in an amount so as to give 1 to 30 mole percent boron compound based on the moles of phosphate.

In the first embodiment the gellation is generally brought about by neutralization carried out either by adding the acid phase, i.e., the aluminum salt/phosphate combination, to a base phase or vice versa. One suitable practice is to drip or spray or otherwise slowly introduce the acid phase into the base phase. This results in the production of small spheres or balls of the orthophosphate when the melt of the aluminum salt and the source of phosphate ions is dripped or sprayed or otherwise slowly added to a large excess of ammonium hydroxide. The spheres are subsequently collected, washed, dried, and if desired calcined.

In the first embodiment gellation occurs spontaneously at a pH of about 4, which is achieved by combining about 72 percent of the neutralizing agent, and it has been found that this is undesirable. Therefore, neutralization is preferably achieved by either: (1) combining slowly with stirring about 72 percent of the amount of neutralizing agent needed for complete neutralization and thereafter quickly adding the rest so as to quickly go through the 4 to 5 pH range and achieve gellation at a pH of 5 or greater, preferably at least 6, generally 6 to 10, or (2) combining 60 to 70 percent of the neutralizing agent needed for complete neutralization and aging until gellation occurs which will generally be 1 minute to 48 hours, more generally 5 minutes to 10 hours, more generally 10 minutes to 3 hours; thus, gellation occurs at a pH below 4, generally about 2.

Also ethylene oxide or propylene oxide or ammonium carbonate or any agent which will neutralize the acid can be used alone or in combination to effect gellation.

In the second embodiment the gellation must be brought about by partial neutralization followed by aging. This can be carried out either by adding the acid phase, i.e., the aluminum salt/phosphate combination, to a neutralizing agent phase or vice versa (or by adding both to a third vessel). One suitable practice is to slowly introduce the neutralizing agent into the acid phase with stirring.

In the second embodiment as stated above, the neutralization must be only partial neutralization so that gellation does not occur immediately but does occur after a reasonable aging time. Surprisingly, this is a relatively narrow range. While gellation can be brought about at a pH anywhere from 4 to 10 or more as is known in the prior art, if the pH is low, i.e., below 5, a poor quality gel forms. However, if 60 to 70 mole percent of the theoretical amount of neutralizing agent is added, based on the exact amount needed for complete neutralization using monobasic ammonium phosphate, and the composition is allowed to sit, gellation occurs under acid conditions but without the bad characteristics associated in the prior art with gelling at an acid pH. Indeed, the results are superior even to gelling at an alkaline pH. The aging can be carried out at any convenient temperature from 0°C to 100°C, for instance, and in any nondeleterious atmosphere. For convenience and economy, this is generally done at room temperature in air. Of course, if the melt method is used and the gelling occurs in a matter of minutes, the composition will still be warm.

In the second embodiment the neutralizing agent is usually a base such as gaseous ammonia or concentrated ammonium hydroxide. Also, ammonia dissolved in alcohol can be used. Also ethylene oxide or propylene oxide or ammonium carbonate or any agent which will neutralize the acid can be used alone or in combination.

In the second embodiment if it is desired to wash the hydrogel with water, then azeotropic distillation or washing with a volatile, oxygen-containing water miscible organic solvent having a relatively low surface tension is desirable (adding water after the gel is formed does not harm the pore structure if it is removed gently). After drying of water in this manner (i.e. replacing the water with the organic liquid), the gel is preferably dried of solvent under mild conditions, for instance by heating at a temperature of 25 to 150°C, most preferably under vacuum. Also, if the purpose is to make a catalyst, it is generally desirable to wash with a base after gellation, preferably ammonium hydroxide or a substituted ammonium hydroxide such as tetramethylammonium hydroxide. Generally, the base will be in water but it can be in an organic solvent. Thus, in this preferred sequence, the gel is washed with an aqueous base and then water removed with the normally liquid organic compound as previously described.

The resulting aluminum phosphate can be utilized as a filler in rubber or plastics, as a catalyst, or as a base for vanadium or chromium so as to produce a catalyst for olefin polymerization.

In the case of chromium, the chromium-containing xerogel must be activated in an oxidizing ambient. This can be carried out either by having chromium coprecipitated with the hydrogel or adding chromium to the hydrogel or adding an anhydrous solution of a chromium compound to the xerogel and thereafter heating in an oxidizing ambient such as air. The chromium or vanadium is present in an amount within the range of 0.001 to 10, preferably 0.1 to 5, more preferably about 1 weight percent based on the weight of the dried support. The activation of the thus formed xerogel can be carried out at a lower temperature than is generally required for activating silica-based chromium catalysts. Temperatures of 150—800°C, preferably 300—800°C, more preferably 300—700°C or 300—600°C, and times of 1 minute to 48 hours, preferably 0.5 to 10 hours are suitable. Alternatively, the activation can be carried out in any ambient under dry conditions and thereafter a zerovalent chromium, for instance π-bonded organochromium compounds such as dicumene chromium or dibenzene chromium, added anhydrously. Any ambient can also be used when the support is used to carry vanadium.

If the purpose is to produce a chromium catalyst support, the aluminum and phosphorus components are selected so as to give an atom ratio of phosphorus to aluminum within the range of 0.2:1 to 1:1, preferably 0.6:1 to 0.9:1. Broadly, however, any ratio, for instance from 0.1:1 to 2:1 can be used.

Vanadium can be combined with the support by coprecipitating a vanadium compound with the phosphate-containing support, by adding a vanadium compound to the support at the hydrogel stage, or by adding a vanadium compound anhydrously to the xerogel. Suitable vanadium compounds include ammonium vanadate, vanadyl sulfate, vanadium tribromide, vanadium di or trichloride, vanadium tri or pentafluoride, vanadyl dibromide and vanadyl tribromide, vanadyl trichloride or other water soluble vanadium compounds. Vanadium acetylacetonate and other hydrocarbon soluble vanadium compounds can be used to impregnate the xerogel.

The catalysts produced using the base prepared by the novel method of this invention containing a chromium or vanadium compound thereon can be used to polymerize at least one mono-1-olefin containing 2 to 8 carbon atoms per molecule, such as ethylene, propylene, 1-butene, 1-pentene, 1-hexene and 1-octene. Such catalysts are of particular applicability in producing ethylene homopolymers and copolymers of ethylene and one or more comonomers selected from 1-olefins containing 3 to 8 carbon atoms per molecule such as propylene, 1-butene, 1-pentene, 1-hexene and 1-octene. These polymers can be produced by solution polymerization, slurry polymerization, and gas phase polymerization using conventional equipment in contact and processes. Contacting of the monomer or monomers with the catalyst can be effected by any manner known in the art of solid catalyst. One convenient method is to suspend the catalyst in an organic medium and to agitate the mixture to maintain the catalyst in suspension throughout the polymerization process. Typically, predominantly ethylene copolymers are prepared using 0.5—20 weight percent comonomer as described above in the feed, preferably sufficient comonomer to give 97 to 99.6 weight percent polymerized ethylene units in the resulting copolymer.

When the novel method of making a phosphate of this invention is used to make a phosphate for a catalyst base for a chromium or vanadium olefin polymerization catalyst, the resulting catalyst can be used in conjunction with a cocatalyst if desired. Suitable cocatalysts include organometal compounds primarily aluminum and boron alkyls. The most preferred boron compounds are trihydrocarbylboron compounds, particularly trialkylboron compounds, such as tri-n-butylborane, tripropylborane, and triethylborane (TEB). Suitable aluminum alkyls include $R_3Al$, $R_2AlX$, and $RAlX_2$ where R is a 1 to 12 carbon atoms hydrocarbyl radical and X is a halogen preferably chlorine. Triethylaluminum and diethylaluminum chloride are particularly suitable.

Hereinafter Examples I to III relate to embodiment 1 and Examples IV and V to embodiment 2.

Example I

A number of samples of aluminum phosphate were made in accordance with this invention and used as a base for a chromium catalyst by the following general techniques. The desired quantity of an aluminum salt such as $Al(NO_3)_3 \cdot 9H_2O$, e.g., about 1 lb. (454 g), was heated to about 80°C to form a melt. The desired quantity of an ammonium phosphate, e.g., $NH_4H_2PO_4$, was dissolved in the melt to provide the atomic ratio of P/Al needed, and finally the desired amount of chromium (III) acetate or chromium (III) nitrate was added to the melt mixture to provide about 1 weight percent chromium based on the weight of the dry, finished catalyst. Sufficient concentrated $NH_4OH$, e.g., 30 weight percent $NH_3$, was mixed with the melt mixture to neutralize it giving a pH of 6 to 7. The resulting mixture was washed with sufficient deionized water to remove substantially all of the ammonium nitrate by-product and the washed product in turn was washed with isopropyl alcohol or other volatile water-miscible organic liquid to displace the water or azeotrope dried. The resulting product was further dried in a vacuum oven and activated in a fluidized bed in dry air for about 5 hours at the specified temperature.

Alternatively, the melt containing the $Al(NO_3)_3 \cdot 9H_2O$, the $NH_4H_2PO_4$ and the $Cr(NO_3)_3 \cdot 9H_2O$ can be treated with $NH_4OH$ to obtain a pH of 6 to 7 to form the gel and the gel dried in the presence of the by-product $NH_4HO_3$. While this is essentially a non-aqueous system, there is a small amount of water present such that a sheet of pH indicator paper can be pressed into the gel and a pH reading obtained. The dry product can then be cautiously calcined to obtain the final catalyst. This procedure must be done carefully to avoid potential explosions or other undesired reactions.

Example II

Ethylene polymerization

Each run was conducted in a clean, dry, air-free, stirred, stainless steel reactor of about a 2 L capacity. About 600 g of isobutane was used in each run as diluent with a catalyst charge ranging from 0.03 to 0.8 g. The reactor and its contents were heated to the desired operating temperature, ethylene was pressured in to give about 565 psia (3.9 MPa), and the run was started immediately as the catalysts, unlike the corresponding chromium oxide-silica catalysts, do not have an induction period. Ethylene pressure was maintained during the run by supplying additional ethylene as required from a reservoir.

Each run was terminated by stopping the ethylene flow and venting the gaseous reactor contents to a flare line for disposal. The polymer was recovered, dried and weighed to determine catalyst productivity which is expressed in terms of grams polyethylene per gram catalyst. When used as a reactor additive (add.) triethylborane (TEB) was added to the reactor as 1 weight percent solution in n-heptane. Hydrogen, when used, was admitted to the reactor to provide 50 psi (0.34 MPa) partial pressure of the total 565 psia (3.9 MPa) reactor pressure.

The physical properties of each polymer, in this and subsequent examples, when given, were determined in accordance with the following ASTM test procedures.

| | |
|---|---|
| Melt index (MI) | ASTM D 1238—65T, Condition E |
| High load melt index (HLMI) | ASTM D 1238—65T, Condition F |
| Density, g/cc | ASTM D 1505—68. |

The HLMI/MI ratio is thought to give an indication of the polymer molecular weight distribution or shear response. As the ratio increases, the molecular weight distribution is also thought to increase.

The heterogeneity index (HI) is thought to provide a more accurate representation of polymer molecular weight distribution. HI is determined from the weight average and number average molecular weight values obtained from size exclusion chromatography and is defined as the ratio of weight average to number average molecular weights. As the ratio increases, the molecular weight distribution is thought to broaden.

Ethylene polymerization was carried out with samples of the catalysts activated at different temperatures and the results are summarized in Table I.

## TABLE I
### Gel mass concentration

| Run No. | Prep. | P/Al | Act. temp. °C | Add. | Run temp. °F(°C) | Prod. g/g | Time min. | MI | HLMI/ MI |
|---|---|---|---|---|---|---|---|---|---|
| 1 Control | Aq-Az[1] | 1.0 | 500 | None | 205 (96°C) | 1725 | 90 | 0(0.74 H)[6] | — |
| 2 Control | Aq-Az[1] | | | 8 ppm TEB | | 3565 | 65 | 0.43 | 375 |
| 3 Control | Aq-Az[1] | | | H₂ | | 1400 | 90 | 0.30 | 152 |
| 4 Control | Aq-Az[1] | | | 8 ppm TEB+H₂ | | 2515 | 50 | 11.4 | 57 |
| 5 Control | Aq-OD[2] | 0.9 | 700 | None | 225 (107°C) | 605 | 90 | 0(0.86 H) | — |
| 6 Control | Aq-OD[2] | | | 8 ppm TEB | | 509 | 60 | 1.2 | 144 |
| 7 Control | Aq-OD[2] | | | H₂ | | 427 | 100 | 0.95 | 104 |
| 8 Control | Aq-OD[2] | | | 8 ppm TEB+H₂ | | 605 | 90 | 32 | 47 |
| 9 Invention | Melt-Az[3] | 0.8 | 700 | None | 205 (96°C) | 3844 | 60 | 0(0.76 H) | — |
| 10 Invention | Melt-Az[3] | | | 4 ppm TEB | | 9420 | 60 | 1.41 | 122 |
| 11 Invention | Melt-Az[3] | | | 4 ppm TEB+H₂ | | 5340 | 60 | 6.8 | 64 |
| 12 Invention | Melt-Az[3] | 0.8 | 500 | None | 205 (96°C) | 3135 | 60 | 0(0.37 H) | — |
| 13 Invention | Melt-Az[3] | | | 4 ppm TEB | | 5440 | 60 | 0.51 | 143 |
| 14 Invention | Melt-Az[3] | | | 4 ppm TEB+H₂ | | 5605 | 60 | 3.15 | 73 |
| 15 Invention | Melt-OD[4] | 0.8 | 600 | 4 ppm TEB | 205 (96°C) | 3010 | 90 | 0.03 | 533 |
| 16 Invention | Melt-Az[5] | 0.8 | 600 | 4 ppm TEB | 205 (96°C) | 2230 | 60 | 0.04 | 511 |

[1] Aqueous precipitation and azeotrope drying, i.e., a conventional dilute mass.

[2] Aqueous precipitation and oven drying, also a conventional dilute mass.

[3] Hydrogel formed from melt but then water added to wash followed by azeotropic drying. This demonstrates the effect of a concentrated mass at the critical time, i.e., when the reactants are combined and shows subsequent addition of water not being harmful.

[4] Hydrogel formed from melt but when water added to wash followed by oven drying, i.e., also a concentrated mass during gellation. In this run, 469 g (1.25 mole) of Al(NO₃)₃ . 9H₂O and 3.98 g boric acid were used with sufficient monobasic ammonium phosphate to give the P/Al ratio of 0.8. Some water (125 mL) was in the melt and the melt was dripped into concentrated ammonium hydroxide.

[5] Like [4] except washed in alcohol and the alcohol removed in a vacuum oven. While the productivity is not outstanding in this run, other runs gave better overall results. One other run similar to this except without boric acid and using aluminum sulfate instead of aluminum nitrate gave 3,200 grams polymer per gram of catalyst in 25 minutes.

[6] "H" indicates HLMI.

Runs 9—16 show a general advantage to the use of the melt technique in productivity and/or melt index.

Example III

A series of aluminum phosphate gels was prepared by employing the melt technique and several variations thereof as shown below in which a melt was formed from 94 g (0.25 mole) of $Al(NO_3)_3 \cdot 9H_2O$, 23 g (0.2 mole) of $NH_4H_2PO_4$, and 2.4 g (0.006 mole) of $Cr(NO_3)_3 \cdot 9H_2O$ by application of gentle heat to give a volume of about 100 mL at a temperature of about 80°C. The calculated P/Al atomic ratio is about 0.8:1. To the melt was added with vigorous stirring, 46 mL (0.72 mole $NH_3$) of concentrated $NH_4OH$ (30 weight percent $NH_3$). The reaction mass at a pH of 6 to 7 set to a hard gel, which was thoroughly washed with hot, deionized water and the washed product divided in two approximately equal portions.

Portion 1 (catalyst 1 base or support) was dried overnight (about 15 hours) in a vacuum oven at 80°C.

Portion 2 (catalyst 2 base) was dried of water by azeotrope distillation with isoamyl alcohol. The alcohol was removed by heating at 60°C in a vacuum oven.

Catalyst 3 base was prepared in the manner used for catalyst 2 base except that in the gelling step the 100 mL of melt was diluted to 200 mL with water (100 mL water) and to it was added 46 mL of concentrated $NH_4OH$.

Catalyst 4 base was prepared in the manner used for catalyst 2 base except that in the gelling step the 100 mL of melt was diluted to 400 mL with water (300 mL of water) and to it was added 46 mL of concentrated $NH_4OH$.

Catalyst 5 base was prepared in the manner used for catalyst 2 base except that gelling occured before all the ammonium hydroxide solution was added because the slow addition right up to the end. The pH was 3 to 4 at this stage and the gel was washed and dried as for catalyst 2 base. This shows that the pH during gelling should be about 5 or above if gellation is to be forced by combination with base until gellation occurs. Partial neutralization followed by aging will give a good product, however.

Catalyst 6 base was prepared by gelling 100 mL of the melt with 46 mL concentrated ammonium hydroxide as described at the beginning of this Example. The resulting gel was dried overnight in a vacuum oven at 80°C without removal of the salt by-product.

Catalyst 7 base was prepared in the manner used for catalyst 2 base except that in the gelling step the 100 mL of melt was gelled with a solution of 46 mL of $NH_4OH$ diluted to 100 mL.

A portion of each catalyst base was then activated at 500°C for 5 hours as before. The surface areas of the recovered, activated catalysts were then determined by the B.E.T. nitrogen sorption method as known in the art.

A portion of each catalyst was tested in ethylene polymerization at 96°C using 4 ppm TEB as adjuvant in each run.

The surface area of each catalyst and its productivity in terms of grams polymer per g catalyst per hour are given in Table II.

TABLE II
Effect of gel mass concentration

| Catalyst base | Catalyst base | Catalyst surface area, m²/g | Productivity g/g cat/hr | Remarks |
|---|---|---|---|---|
| 1 Invention | Concentrated | 330—380[a] | 2540 | washed, oven dried |
| 2 Invention | Concentrated | 330—380[a] | 3955 | washed, azeotrope dried |
| 3 Control | Dilute | 254 | 3540 | diluted before gelling |
| 4 Control | Dilute | 223 | 3020 | diluted before gelling |
| 5 Invention | Concentrated | 493 | dead | gel at acid pH |
| 6 Invention | Concentrated | 330—380[a] | 4160 | unwashed, oven dried |
| 7 Control | Dilute | 269 | 2485 | diluted before gelling |

[a] Estimated surface area based on similar preparations.

Runs 1, 2, and 6 show an advantage for preparing the base in accordance with the invention utilizing the melt technique as compared with runs wherein the melt was diluted with water to give, in effect, a conventional aqueous system. Run 1 of Example II compared with run 5 of Example I shows even more the advantage for the melt preparation compared with the conventional aqueous preparation so far as productivity is concerned.

As can be seen, in every instance higher surface area was obtained by gelling from a concentrated mass.

Example IV

A melt of 1,230 grams of $Al(NO_3)_3 \cdot 9H_2O$ plus 302 grams of $NH_4H_2PO_4$ and 75 grams $Cr(NO_3)_3 \cdot 9H_2O$ (about 5 percent chromium in the final catalyst) plus 50 cm³ water was made. The final volume after heating to melt to form a homogeneous syrup was 1,200 cm³.

Of this 1,200 cm³, a 200 cm³ first aliquot was put into a blender and very slowly 70 cm³ concentrated ammonium hydroxide was added. This is 56 percent of the theoretical 125 cm³ needed for complete neutralization. The liquid got hot and was poured into a beaker and allowed to stand for 24 hours but did not gel.

A second 200 cm³ aliquot of the melt was put into a blender as above and very slowly 80 cm³ of concentrated ammonium hydroxide was added. After blending together the liquid is poured into a beaker. After 3 hours, it got thick. After 24 hours, it resembled jello. Eighty cm³ is 64 percent of the theoretical amount needed for complete neutralization.

A third 200 cm³ aliquot of the basic melt was put in a blender and very slowly (over 2 minutes) 85 cm³ of concentration ammonium hydroxide was added. The resulting liquid was poured out into a beaker. It turned into a hard gel in about 10 minutes at a pH of about 2.

A fourth 200 cm³ aliquot of the basic melt was placed in a blender and very slowly 90 cm³ of concentrated ammonium hydroxide was added. It gelled before it could be taken out of the blender. This represents 72 percent of the theoretical amount of neutralizing agent required for complete neutralization.

A fifth 200 cm³ aliquot of the melt was placed in a blender with 50 cm³ of water and 90 cm³ of the ammonium hydroxide was slowly added. The solution got hot and was poured into a beaker. Nothing happened in 10 minutes. It was put back in the blender, another 5 cm³ of ammonium hydroxide added and it got thick. It was poured into a beaker and gelled during the operation of pouring it into the beaker.

The liquid from the first aliquot to which 70 cm³ of ammonium hydroxide were added and which had not gelled after 24 hours was put back in a blender and 10 cm³ additional ammonium hydroxide added whereupon it gelled immediately in the blender. These runs demonstrate that about 56 percent neutralization is too little to effect gellation after a reasonable aging time and that about 72 percent is too much causing immediate gellation which would be, of course, under acid conditions which is believed in the prior art to be bad. These data further show that when about two-thirds (60 to 70 percent) of the amount of base needed for gellation is used, gelling will occur under acid conditions after a waiting period. These results also show that there is an interrelationship between the amount of dilution and the amount of base used with dilution tending to inhibit gellation and additional base, of course, tending to expedite it.

Example V

A melt was made as in Example IV and neutralized by slow addition with stirring of two-thirds of the ammonium hydroxide needed for complete neutralization. This made a solution with a pH of about 2 which was set aside to cool. Within an hour, it was hard. After about three hours, it was knocked out of the beaker as a hard brick. The next day, the brick was split into four pieces which were each crushed, washed and dried as follows:

A1: Washed with three volumes of hot water. The particles fell apart into a mush. It was then dried in a vacuum oven at 60°C.

A2: The same water wash was used as in A1 and then the gel was washed three times with acetone, and dried under a vacuum oven.

A3: The third aliquot was washed with three volumes of hot water to which had been added ammonium hydroxide to make a pH of 8 to 9 and was oven dried under vacuum to 60°C.

A4: This was treated in the same manner as A3 except it was washed three times with acetone before the oven drying.

All four samples were activated in air 5 hours at 700°C.

Ethylene was polymerized under particle form conditions in a stirred, stainless steel reactor of about 2 L capacity employing about 600 g of isobutane as diluent in each run with a catalyst charge ranging from 0.03 to 1.2 g, and in the presence of 1 mL of a hydrocarbon solution of triethylborane (TEB). The reactor and its contents were heated to the operating temperature of 205°F (96°C), ethylene was pressured in to give an ethylene pressure of about 550 psig (3.8 MPa) and the run was started and continued for the time set out. Ethylene pressure was maintained during the run by supplying additional ethylene as required from a reservoir.

Each run was terminated by stopping ethylene flow and venting the gaseous contents to a flare line for disposal. The polymer was recovered, dried and weighed to determine catalyst productivity which is expressed in terms of grams polyethylene per gram catalyst for the time period set out.

The polymerization results were as follows:

10

## 0 056 164

Polymerization results

| Sample | Productivity | Time | MI | HLMI/MI[1] |
|---|---|---|---|---|
| A1 | Trace | 30 min | — | — |
| A2 | 2,895 | 22 min | 0.54 | 212 |
| A3 | 453 | 60 | — | — |
| A4 | 7,470 | 30 | 0.78 | 102 |
| A4 | 7,790 | 20 | — | — |
| A4 | 10,600 | 60 | 0.49 | 229 |

[1] MI is Melt Index determined by ASTM D 1238—65T, Condition E and High Load Melt Index (HLMI) by Condition F.

As can be seen, the catalyst produced in accordance with this invention had the ability to produce polymer with exceptional productivity and good melt index. In addition, the rate of polyermization held constant during the runs, as evidenced by a constant rotameter reading for rate of ethylene addition, thus giving better overall activity than in a conventional chromium/AlPO$_4$ preparation.

## Claims

1. A process for producing gelled aluminum orthophosphate by reacting an aluminum salt with a source of orthophosphate ions and adding to the reaction mixture a neutralizing agent characterized in that said reaction of said aluminum salt and said source of orthophosphate ions is carried out in a concentrated mass containing no more than 40 weight percent added water, based on the weight of said aluminum salt, to obtain said gelled aluminum phosphate.

2. The process of claim 1 characterized by combining the mass with a base as said neutralizing agent to form aluminum phosphate hydrogel, and removing water from said hydrogel to produce a xerogel.

3. The process of claim 2 characterized in that said added water is at most 20 weight percent.

4. The process of any of claims 1 to 3 characterized in that said gel is formed at a pH of at least 6.

5. The process of claim 1 characterized by said neutralizing agent being used in an amount insufficient to cause immediate gelation, and aging until gelation occurs to form a hydrogel.

6. The process of claim 5 characterized in that said neutralizing agent is used in an amount to give a pH below 4.

7. The process of any of claims 1 to 6 characterized in that said aluminum salt is hydrated aluminum nitrate.

8. The process of any of claims 1 to 6 characterized in that said aluminum salt is in the form of a syrup in water.

9. The process of claim 8 characterized in that said aluminum salt is aluminum sulfate.

10. The process of any of claims 1 to 6 characterized in that said aluminum salt is in the form of a melt.

11. The process of any of claims 1 to 6 characterized in that said aluminum salt is hydrated aluminum nitrate and from 5 to 20 weight percent water based on the weight of the hydrated aluminum nitrate is added.

12. The process of claim 11 characterized in that the amount of water is from 1 to 15 weight percent.

13. The process of any of claims 1 to 6 characterized in that no extreneous water is added.

14. The process of any of the preceding claims characterized in that said source of orthophosphate ions is monobasic ammonium phosphate.

15. The process of any of claims 2—14 characterized in that said base is ammonia or ammonium hydroxide.

16. The process of any of the preceding claims characterized in that said hydrogel occupies from 3 to 6 ml per gram of aluminum phosphate.

17. The process of claim 2 characterized in that said aluminum salt is molten hydrated aluminum nitrate, said source of orthophosphate ions is monobasic ammonium phosphate, said melt is formed at a temperature of 80±5°C, and said gelation is carried out by combining the aluminum nitrate monobasic ammonium phosphate composition with concentrated ammonia hydroxide to form a gel at a pH of at least 6.

18. The process of claim 5 characterized in that said gel forms in a time within the range of 5 minutes to 10 hours.

19. The process of claim 5 characterized in that said aluminum salt is molten hydrated aluminum nitrate, said source or orthophosphate ions is monobasic ammonium phosphate, a chromium compound is

11

also present, said melt is formed at a temperature of 80±5°C, said gelation is carried out by adding concentrated ammonium hydroxide to said concentrated mass in an amount within the range of 60 to 70 mole percent of the theoretical amount needed for complete neutralization, wherein said hydrogel is washed with an ammonium hydroxide solution, and wherein before drying the water is replaced with a liquid water-miscible organic liquid.

20. A catalyst produced by combining an aluminum salt with a source of orthophosphate ions in a concentrated mass according to any of claims 2 to 4 and 7 to 17, characterized in that from 0.001 to 10 weight percent chromium or vanadium based on the weight of the xerogel is introduced at or prior to the xerogel stage, and the catalyst is thereafter activated at an elevated temperature in an oxidizing ambient.

21. A catalyst produced by combining a source of aluminum ions with a source of phosphate ions in a concentrated mass according to any of claims 5 to 16, 18 or 19 to obtain a hydrogel, removing water from said hydrogel to produce a xerogel, thereafter activating at an elevated temperature in a oxidizing ambient, wherein from 0.001 to 10 weight percent chromium or vanadium based on the weight of the xerogel is introduced prior to said activating.

22. The catalyst of claim 21 characterized in that said catalyst contains chromium.

23. A catalyst produced by combining an aluminum salt with a source of orthophosphate ions in a concentrated mass according to any of claims 2 to 4 and 7 to 17 characterized by activating the obtained xerogel at an elevated temperature and introducing a zerovalent chromium compound under anhydrous conditions.

24. The catalyst of claim 20 or 23 characterized by an atomic ratio of phosphorus to aluminum in the resulting aluminum phosphate of from 0.6:1 to 0.9:1.

25. The use of a catalyst of one of claims 20 to 25 for the polymerization or copolymerization of mono-1-olefins containing 2 to 8 carbon atoms, optionally in the presence of an organometal cocatalyst.

26. The use of claim 25 characterized in that said organometal cocatalyst is a trialkylborane.

**Patentansprüche**

1. Verfahren zur Herstellung von geliertem Aluminiumorthophosphat durch Umsetzung eines Aluminiumsalzes mit einer Quelle von Orthophosphationen und Zugabe eines Neutralisationsmittels zur Reaktionsmischung, dadurch gekennzeichnet, daß die Umsetzung des Aluminiumsalzes und der Quelle von Orthophosphationen in einer konzentrierten Masse enthaltend nicht mehr als 40 Gew.-% zugesetztes Wasser, bezogen auf das Gewicht des Aluminiumsalzes, ausgeführt wird, um das gelierte Aluminiumphosphat zu erhalten.

2. Verfahren nach Anspruch 1, dadurch gekennzeichnet, daß die Masse mit einer Base als Neutralisationsmittel vereinigt wird, um Aluminiumphosphathydrogel zu bilden, und aus dem Hydrogel Wasser entfernt wird, um ein Xerogel zu bilden.

3. Verfahren nach Anspruch 2, dadurch gekennzeichnet, daß das zugesetzte Wasser höchstens 20 Gew.-% ausmacht.

4. Verfahren nach einem der Ansprüche 1 bis 3, dadurch gekennzeichnet, daß das Gel bei einem pH von mindestens 6 gebildet wird.

5. Verfahren nach Anspruch 1, dadurch gekennzeichnet, daß das Neutralizationsmittel in einer für eine sofortige Gelierung ungenügenden Menge verwendet wird, und altern gelassen wird bis Gelierung eintritt, um ein Hydrogel zu bilden.

6. Verfahren nach Anspruch 5, dadurch gekennzeichnet, daß das Neutralizationsmittel in einer Menge verwendet wird, um einen pH unter 4 zu erhalten.

7. Verfahren nach einem der Ansprüche 1 bis 6, dadurch gekennzeichnet, daß das Aluminiumsalz hydratisiertes Aluminiumnitrat ist.

8. Verfahren nach einem der Ansprüche 1 bis 6, dadurch gekennzeichnet, daß das Aluminiumsalz in Form eines Sirups in Wasser vorliegt.

9. Verfahren nach Anspruch 8, dadurch gekennzeichnet, daß das Aluminiumsalz Aluminiumsulfat ist.

10. Verfahren nach einem der Ansprüche 1 bis 6, dadurch gekennzeichnet, daß das Aluminiumsalz in Form einer Schmelze vorliegt.

11. Verfahren nach einem der Ansprüche 1 bis 6, dadurch gekennzeichnet, daß das Aluminiumsalz hydratisiertes Aluminiumnitrat ist, und 5 bis 20 Gew.-% Wasser, bezogen auf das Gewicht des hydratisierten Aluminiumnitrates, zugesetzt wird.

12. Verfahren nach Anspruch 11, dadurch gekennzeichnet, daß die Menge an Wasser 1 bis 15 Gew.-% beträgt.

13. Verfahren nach einem der Ansprüche 1 bis 6, dadurch gekennzeichnet, daß kein Fremdwasser zugesetzt wird.

14. Verfahren nach einem der vorhergehenden Ansprüche, dadurch gekennzeichnet, daß die Quelle von Orthophosphationen einbasisches Aluminiumphosphat ist.

15. Verfahren nach einem der Ansprüche 2 bis 14, dadurch gekennzeichnet, daß die Base Ammoniak oder Ammoniumhydroxid ist.

16. Verfahren nach einem der vorhergehenden Ansprüche, dadurch gekennzeichnet, daß das Hydrogel 3 bis 5 ml pro Gramm Aluminiumphosphat einnimmt.

17. Verfahren nach Anspruch 2, dadurch gekennzeichnet, daß das Aluminiumsalz geschmolzenes hydratisiertes Aluminiumnitrat ist, die Quelle der Orthophosphationen einbasisches Ammoniumphosphat ist, die Schmelze bei einer Temperatur von 80±5°C gebildet wird und die Gelierung durch Vereinigung der Zusammensetzung aus Aluminiumnitrat und einbasischem Ammoniumphosphat mit konzentriertem Ammoniumhydroxid ausgeführt wird, um ein Gel bei einem pH von mindestens 6 zu bilden.

18. Verfahren nach Anspruch 5, dadurch gekennzeichnet, daß das Gel in einer Zeit innerhalb des Bereiches von 5 min bis 10 h gebildet wird.

19. Verfahren nach Anspruch 5, dadurch gekennzeichnet, daß das Aluminiumsalz geschmolzenes hydratisiertes Aluminiumnitrat ist, die Quelle der Orthophosphationen einbasisches Ammoniumphosphat ist, auch eine Chromverbindung vorliegt, die Schmelze bei einer Temperatur von 80±5°C gebildet wird, die Gelierung durch Zusatz von konzentriertem Ammoniumhydroxid zur konzentrierten Masse in einer Menge im Bereich von 60 bis 70 Mol-% der theoretisch zur vollständigen Neutralisation notwendigen Menge ausgeführt wird, wobei das Hydrogel mit einer Ammoniumhydroxidlösung gewaschen wird und wobei vor Trocknung das Wasser durch eine flüssige wassermischbare organische Flüssigkeit ersetzt wird.

20. Katalysator, hergestellt durch Vereinigung eines Aluminiumsalzes mit einer Quelle von Orthophosphationen in einer konzentrierten Masse nach einem der Ansprüche 2 bis 4 und 7 bis 17, dadurch gekennzeichnet, daß 0,001 bis 10 Gew.-% Chrom oder Vanadium, bezogen auf das Gewicht des Xerogels, in oder vor der Xerogelstufe eingebracht werden und der Katalysator danach bei einer erhöhten Temperatur in einem oxidierenden Milieu aktiviert wird.

21. Katalysator, hergestellt durch Vereingung einer Quelle von Aluminiumionen mit einer Quelle von Phosphationen in einer Konzentrierten Masse gemäß einem der Ansprüche 5 bis 16, 18 oder 19, um ein Hydrogel zu erhalten, Entfernung des Wassers aus dem Hydrogel, um ein Xerogel herzustellen, danach Aktivierung bei einer erhöhten Temperatur in einem oxidierenden Milieu, wobei 0,001 bis 10 Gew.-% Chrom oder Vanadium, bezogen auf das Gewicht des Xerogels, vor der Aktivierung eingebracht werden.

22. Katalysator nach Anspruch 21, dadurch gekennzeichnet, daß der Katalysator Chrom enthält.

23. Katalysator, hergestellt durch Vereinigung eines Aluminiumsalzes mit einer Quelle von Orthophosphationen in einer konzentrierten Masse nach einem der Ansprüche 2 bis 4 und 7 bis 17, dadurch gekennzeichnet, daß das erhaltene Xerogel bei einer erhöhten Temperatur aktiviert und eine nullwertige Chromverbindung unter wasserfreien Bedingungen eingebracht wird.

24. Katalysator nach Anspruch 20 oder 23, dadurch gekennzeichnet, daß ein Atomverhältnis von Phosphor zu Aluminium in dem resultierenden Aluminiumphosphat von 0,6:1 bis 0,9:1 vorliegt.

25. Verwendung eines Katalysators nach einem der Ansprüche 20 bis 25 zur Polymerization oder Copolymerisation von Mono-1-olefinen mit 2 bis 8 Kohlenstoffatomen, gegebenenfalls in Gegenwart eines Organometall-Cokatalysators.

26. Verwendung nach Anspruch 25, dadurch gekennzeichnet, daß der Organometall-Cokatalysator ein Trialkylboran ist.

**Revendications**

1. Procédé de production d'un orthophosphate d'aluminium gélifié en faisant réagir un sel d'aluminium avec une source d'ions orthophosphate et en ajoutant au mélange réactionnel un agent de neutralisation, caractérisé en ce que cette réaction de ce sel d'aluminium et de cette source d'ions orthophosphate est effectuée dans une masse concentrée ne contenant pas plus de 40% en poids d'eau ajoutée par rapport au poids de ces sels d'aluminium, pour obtenir ce phosphate d'aluminium gélifié.

2. Procédé selon la revendication 1, caractérisé en ce qu'on combine la masse avec une base comme cet agent de neutralisation pour former un hydrogel de phosphate d'aluminium et en ce qu'on élimine l'eau de cet hydrogel pour produire un xérogel.

3. Procédé selon la revendication 2, caractérisé en ce que cette eau ajoutée est de 20% en poids au maximum.

4. Procédé selon l'une quelconque des revendications 1 à 3, caractérisé en ce que ce gel est formé à un pH d'au moins 6.

5. Procédé selon la revendication 1, caractérisé en ce que cet agent de neutralisation est utilisé dans une quantité insuffisante pour provoquer une gélification immédiate, et en ce qu'on fait vieillir jusqu'à ce que la gélification se produise pour former un hydrogel.

6. Procédé selon la revendication 5, caractérisé en ce que cet agent de neutralisation est utilisé dans une quantité donnant un pH inférieur à 4.

7. Procédé selon l'une quelconque des revendications 1 à 6, caractérisé en ce que ce sel d'aluminium est le nitrate d'aluminium hydraté.

8. Procédé selon l'une quelconque des revendications 1 à 6, caractérisé en ce que ce sel d'aluminium est sous la forme d'un sirop dans de l'eau.

9. Procédé selon la revendication 8, caractérisé en ce que ce sel d'aluminium est du sulfate d'aluminium.

10. Procédé selon l'une quelconque des revendications 1 à 6, caractérisé en ce que ce sel d'aluminium est sous la forme d'une masse fondue.

11. Procédé selon l'une quelconque des revendications 1 à 6, caractérisé en ce que ce sel d'aluminium est du nitrate d'aluminium hydraté et en ce qu'on ajoute 5 à 20% en poids d'eau par rapport au poids de nitrate d'aluminium hydraté.

12. Procédé selon la revendication 11, caractérisé en ce que la quantité d'eau est de 1 à 15% en poids.

13. Procédé selon l'une quelconque des revendications 1 à 6, caractérisé en ce qu'on n'ajoute pas d'eau extérieure.

14. Procédé selon l'une quelconque des revendications précédentes, caractérisé en ce que cette source d'ions orthophosphate est du phosphate d'ammonium monobasique.

15. Procédé selon l'une quelconque des revendications 2 à 14, caractérisé en ce que cette base est de l'ammoniac ou de l'hydroxyde d'ammonium.

16. Procédé selon l'une quelconque des revendications précédentes, caractérisé en ce que cet hydrogel occupe de 3 à 6 ml par gramme de phosphate d'aluminium.

17. Procédé selon la revendication 2, caractérisé en ce que ce sel d'aluminium est du nitrate d'aluminium hydraté fondu, cette source d'ions orthophosphate est du phosphate d'ammonium monobasique, cette masse fondue est formée à une température de 80±50°C et cette gélification est effectuée en combinant la composition nitrate d'aluminium phosphate d'ammonium monobasique avec de l'hydroxyde d'ammonium concentré pour former un gel à un pH d'au moins 6.

18. Procédé selon la revendication 5, caractérisé en ce que ce gel se forme dans un temps dans l'intervalle de 5 minutes à 10 heures.

19. Procédé selon la revendication 5, caractérisé en ce que ce sel d'aluminium est du nitrate d'aluminium hydraté fondu, cette source d'ions orthophosphate est du phosphate d'ammonium monobasique, un composé du chrome est également présent, cette masse fondue est formée à une température de 80±5°C, cette gélification est effectuée en ajoutant de l'hydroxyde d'ammonium concentré à cette masse concentrée dans une proportion dans l'intervalle de 60 à 70 moles % de la quantité théorique nécessaire pour une neutralisation complète, cet hydrogel étant lavé avec une solution d'hydroxyde d'ammonium, et l'eau étant remplacée avant séchage par un liquide organique miscible à l'eau liquide.

20. Catalyseur produit en combinant un sel d'aluminium avec une source d'ions orthophosphate dans une masse concentrée conformément à l'une quelconque des revendications 2 à 4 et 7 à 17, caractérisé en ce que de 0,001 à 10% en poids de chrome ou vanadium par rapport au poids du xérogel sont introduits au stade du xérogel ou avant ce stade, et le catalyseur peut ensuite être activé à température élevée dans une ambiance oxydante.

21. Catalyseur produit en combinant une source d'ions aluminium avec une source d'ions phosphate dans une masse concentrée suivant l'une quelconque des revendications 5 à 16, 18 ou 19 pour obtenir un hydrogel, en ce qu'on élimine de l'eau de cet hydrogel pour produire un xérogel, puis en ce qu'on active à une température élevée dans une ambiance oxydante, de 0,001 à 10% en poids de chrome ou de vanadium par rapport au poids du xérogel étant introduits avant cette activation.

22. Catalyseur selon la revendication 21, caractérisé en ce que ce catalyseur contient du chrome.

23. Catalyseur produit en combinant un sel d'aluminium avec une source d'ions orthophosphate en une masse concentrée, conformément à l'une quelconque des revendications 2 à 4 et 7 à 17 caractérisé en ce qu'on active le xérogel obtenu à température élevée et en ce qu'on introduit un composé de chrome zérovalent en milieu anhydre.

24. Catalyseur selon la revendication 20 ou 23, caractérisé par un rapport atomique du phosphore à l'aluminium dans le phosphate d'aluminium obtenu de 0,6:1 à 0,9:1.

25. Utilisation d'un catalyseur suivant l'une quelconque des revendications 20 à 24 pour polymériser ou copolymériser des mono-1-oléfines contenant 2 à 8 atomes de carbone, en présence si on le désire d'un cocatalyseur organométallique.

26. Utilisation de la revendication 25, caractérisée en ce que ce cocatalyseur organométallique est un trialkylborane.